# EUROPEAN PATENT APPLICATION

(11) **EP 4 331 751 A1**
(43) Date of publication of application: **06.03.2024**
(21) Application number: 21939307.1
(22) Date of filing: 28.04.2021
(51) Int. Cl.: B23B 27/00, B23Q 17/09

(54) **CUTTING TOOL**

(71) Applicant: SUMITOMO ELECTRIC INDUSTRIES, LTD., Osaka-shi, Osaka 541-0041 (JP)
(72) Inventor: HARADA, Masashi, Osaka-shi, Osaka 541-0041 (JP); KURIYAMA, Hiromitsu, Osaka-shi, Osaka 541-0041 (JP); AOKI, Tomoya, Osaka-shi, Osaka 541-0041 (JP)
(74) Representative: Boult Wade Tennant LLP
(86) International application number: PCT/JP2021/017100
(87) International publication number: WO 2022/230148

(57) **Abstract**

A cutting tool includes a body portion having a bar shape extending from a first end to a second end, and a sensor unit arranged on a surface of the body portion. The surface of the body portion includes a first surface, a second surface, and a third surface. The sensor unit includes a first strain sensor arranged on any of the first surface, the second surface, and the third surface, a board module electrically connected to the first strain sensor, and a wireless communication unit mounted on the board module and transmitting a signal containing information on strain of the body portion detected by the first strain sensor to the outside. The board module includes a first portion arranged on the first surface, a second portion arranged on the second surface, and a connecting portion electrically connecting the first portion to the second portion. The first strain sensor is electrically connected to the first portion or the second portion.

## Description

### Technical Field

The present disclosure relates to a cutting tool.

### Background Art

Techniques for monitoring the state of a cutting tool by measuring a physical quantity, e.g. strain, of the cutting tool with a sensor during machining with the cutting tool are known (see, for example, Japanese Patent Application Laid-Open No. 2020-62746 (Patent Literature 1), European Patent Application Publication No. 3292929 (Patent Literature 2), European Patent Application Publication No. 3292930 (Patent Literature 3), Japanese Patent Application Laid-Open No. 2019-166600 (Patent Literature 4), International Publication No. WO 2014/154593 (Patent Literature 5), Japanese Patent Application Laid-Open No. 2007-30138 (Patent Literature 6), International Publication No. WO 2007/088197 (Patent Literature 7), Japanese Patent Application Laid-Open No. H3-294150 (Patent Literature 8), Japanese Patent Application Laid-Open No. 2012-20359 (Patent Literature 9), Japanese Patent Application Laid-Open No. 2019-130635 (Patent Literature 10), Japanese Patent Application Laid-Open No. 2019-209420 (Patent Literature 11), Japanese Patent Application Laid-Open No. 2018-54612 (Patent Literature 12), International Publication No. WO 2016/202569 (Patent Literature 13), Japanese Patent Application Laid-Open No. 2009-285804 (Patent Literature 14), and International Publication No. WO 2018/047834 (Patent Literature 15)).

### Citation List

### Patent Literature

Patent Literature 1: Japanese Patent Application Laid-Open No. 2020-62746
Patent Literature 2: European Patent Application Publication No. 3292929
Patent Literature 3: European Patent Application Publication No. 3292930
Patent Literature 4: Japanese Patent Application Laid-Open No. 2019-166600
Patent Literature 5: International Publication No. WO 2014/154593
Patent Literature 6: Japanese Patent Application Laid-Open No. 2007-30138
Patent Literature 7: International Publication No. WO 2007/088197
Patent Literature 8: Japanese Patent Application Laid-Open No. H3-294150
Patent Literature 9: Japanese Patent Application Laid-Open No. 2012-20359
Patent Literature 10: Japanese Patent Application Laid-Open No. 2019-130635
Patent Literature 11: Japanese Patent Application Laid-Open No. 2019-209420
Patent Literature 12: Japanese Patent Application Laid-Open No. 2018-54612
Patent Literature 13: International Publication No. WO 2016/202569
Patent Literature 14: Japanese Patent Application Laid-Open No. 2009-285804
Patent Literature 15: International Publication No. WO 2018/047834

### Summary of Invention

A cutting tool according to the present disclosure is a cutting tool for cutting a workpiece by contacting the workpiece that is rotating. The cutting tool includes: a body portion having a bar shape extending from a first end to a second end; and a sensor unit arranged on a surface of the body portion. The surface of the body portion includes a first surface, a second surface, and a third surface. The sensor unit includes a first strain sensor arranged on any of the first surface, the second surface, and the third surface, a board module electrically connected to the first strain sensor, and a wireless communication unit mounted on the board module and transmitting a signal containing information on strain of the body portion detected by the first strain sensor to an outside. The board module includes a first portion arranged on the first surface, a second portion arranged on the second surface, and a connecting portion electrically connecting the first portion to the second portion. The first strain sensor is electrically connected to the first portion or the second portion.

### Brief Description of Drawings

FIG. 1 is a schematic perspective view showing the structure of a cutting tool.
FIG. 2 is a schematic perspective view showing the structure of the cutting tool with lids removed therefrom.
FIG. 3 is a schematic plan view showing the structure of the cutting tool as viewed from a first end side.
FIG. 4 is a schematic plan view showing the structure of the cutting tool as viewed from a second end side.
FIG. 5 is a schematic cross-sectional view along the line V-V in FIG. 2.
FIG. 6 is a schematic cross-sectional view along the line VI-VI in FIG. 1.
FIG. 7 is a schematic perspective view showing the structure of a cutting tool of Embodiment 2 with lids removed therefrom.
FIG. 8 is a schematic perspective view showing the structure of a cutting tool of Embodiment 3 with lids removed therefrom.
FIG. 9 is a schematic cross-sectional view along the line IX-IX in FIG. 8.
FIG. 10 is a schematic perspective view showing the structure of a cutting tool of Embodiment 4 with lids removed therefrom.
FIG. 11 is a schematic plan view showing the structure of the cutting tool of Embodiment 4 with a lid removed therefrom.
FIG. 12 is a schematic perspective view showing the structure of a cutting tool of Embodiment 5 with lids removed therefrom.
FIG. 13 is a schematic perspective view showing the structure of a cutting tool of Embodiment 6 with lids removed therefrom.
FIG. 14 is a schematic perspective view of the cutting tool of Embodiment 6 as seen in a different viewpoint from that of FIG. 13.

### Description of Embodiments

### [Problems to be Solved by Present Disclosure]

In order to monitor the state of the cutting tool during machining, a structure can be adopted in which a strain sensor is disposed in a body portion of the cutting tool and information on strain detected by the strain sensor is transmitted to the outside by a wireless communication unit. However, this requires an element and a circuit other than the wireless communication unit so as to perform processing such as converting the information on the strain detected by the strain sensor to a signal that can be transmitted by the wireless communication unit. If these element and circuit are disposed on one surface of the body portion, the handling of the cutting tool, such as holding the cutting tool while in use, may become difficult. One of the objects of the present disclosure is to enable monitoring of the state of the cutting tool during machining while maintaining the ease of handling.

### [Advantageous Effects of Present Disclosure]

The cutting tool of the present disclosure enables monitoring of the state of the cutting tool during machining while maintaining the ease of handling.

### [Description of Embodiments of Present Disclosure]

Embodiments of the present disclosure will be first listed and described. The cutting tool of the present disclosure is a cutting tool for cutting a workpiece by contacting the workpiece that is rotating. The cutting tool includes: a body portion having a bar shape extending from a first end to a second end; and a sensor unit arranged on a surface of the body portion. The surface of the body portion includes a first surface, a second surface, and a third surface. The sensor unit includes a first strain sensor arranged on any of the first surface, the second surface, and the third surface, a board module electrically connected to the first strain sensor, and a wireless communication unit mounted on the board module and transmitting a signal containing information on strain of the body portion detected by the first strain sensor to an outside. The board module includes a first portion arranged on the first surface, a second portion arranged on the second surface, and a connecting portion electrically connecting the first portion to the second portion. The first strain sensor is electrically connected to the first portion or the second portion.

In the cutting tool of the present disclosure, the wireless communication unit transmits the signal containing the information on the strain of the body portion detected by the first strain sensor to the outside. In the cutting tool of the present disclosure, the board module includes the first portion arranged on the first surface and the second portion arranged on the second surface. The first and second portions are connected by the connecting portion. The board module thus being divided and arranged on different surfaces of the body portion leads to an increased degree of freedom in the locations for positioning the board module. As a result, it is easy to maintain the ease of handling of the cutting tool. Thus, the cutting tool of the present disclosure enables monitoring of the state of the cutting tool during machining, while maintaining the ease of handling.

In the above cutting tool, the first surface may have a first recess formed therein. The second surface may have a second recess formed therein. The first portion may be arranged in the first recess. The second portion may be arranged in the second recess. The first strain sensor may be arranged in one of the first recess and the second recess, or with the third surface having a third recess formed therein, the first strain sensor may be arranged in the third recess. Such a configuration suppresses the sensor and other components from protruding to the outside and becoming an obstacle in the handling of the cutting tool.

The above cutting tool may further include a lid that covers a sensor housing recess, which is one of the first recess, the second recess, and the third recess in which the first strain sensor is arranged. The body portion may include a first bottom wall constituting a wall surface defining the sensor housing recess, and a second bottom wall constituting the wall surface defining the sensor housing recess, the second bottom wall having a smaller distance from an opening of the sensor housing recess than the first bottom wall, the second bottom wall surrounding the first bottom wall as viewed in a depth direction of the sensor housing recess. The first strain sensor may be arranged on the first bottom wall. The lid may be arranged on the second bottom wall and may be received within the sensor housing recess. The lid being provided in the cutting tool can protect the first strain sensor in the sensor housing recess (for example, maintain a waterproof state). With the lid being arranged on the second bottom wall and received within the sensor housing recess, the lid is suppressed from becoming an obstacle in the handling of the cutting tool. Further, with the lid being arranged on the second bottom wall, the lid may contribute to increased rigidity of the cutting tool.

In the above cutting tool, the first portion may be a first board. The second portion may be a second board. The connecting portion may be a cable or a connecting board that electrically connects the first board to the second board. The body portion may have a first through hole formed to connect the first surface to the second surface. The cable or the connecting board may electrically connect the first board to the second board through the first through hole. Adopting such a structure in which the two boards are connected by the cable or the connecting board that passes through the through hole connecting the first and second surfaces facilitates achieving the structure of the cutting tool of the present disclosure.

In the above cutting tool, the first portion, the second portion, and the connecting portion may be composed of a single board. Such a configuration also facilitates achieving the structure of the cutting tool of the present disclosure.

In the above cutting tool, the sensor unit may further include first wiring that connects the first strain sensor to the board module with slack. Providing the first wiring with the slack in this manner facilitates placing the first strain sensor without adjusting the length of the wiring.

In the above cutting tool, the surface of the body portion may have a fourth recess formed therein. A portion of the first wiring corresponding to the above-described slack may be housed in the fourth recess. Such a configuration facilitates connecting the first strain sensor to the board module with the first wiring with slack.

In the above cutting tool, the sensor unit may further include a second strain sensor electrically connected to the board module. The wireless communication unit may transmit the signal further containing information on the strain of the body portion detected by the second strain sensor to the outside. The first strain sensor may be arranged on the first surface and electrically connected to the first portion. The second strain sensor may be arranged on the second surface and electrically connected to the second portion.

The first strain sensor and the second strain sensor thus arranged on the first surface and the second surface, respectively, of the body portion allow measurement of the strain in two directions of the cutting tool. Further, transmitting the signal containing the information on the strain of the body portion detected by the first strain sensor and the second strain sensor using a common wireless communication unit can achieve downsizing as compared to the case where wireless communication units corresponding respectively to the first strain sensor and the second strain sensor are provided.

In the above cutting tool, the sensor unit may further include a third strain sensor arranged on the third surface, and third wiring connected to the third strain sensor. The body portion may have a second through hole formed to connect the third surface to the first surface or the second surface. The third wiring may connect the third strain sensor to the first portion or the second portion through the second through hole. This configuration can achieve downsizing while measuring the strain in three directions of the cutting tool.

### [Details of Embodiments of Present Invention]

Embodiments of the cutting tool according to the present disclosure will be described below with reference to the drawings. In the drawings referenced below, the same or corresponding portions are denoted by the same reference numerals and the description thereof will not be repeated.

### (Embodiment 1)

### (1) Structure of Body Portion

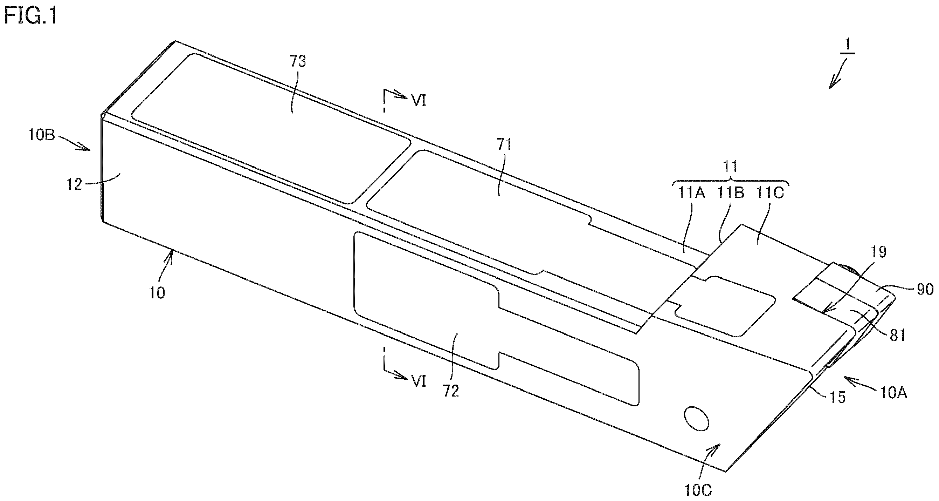

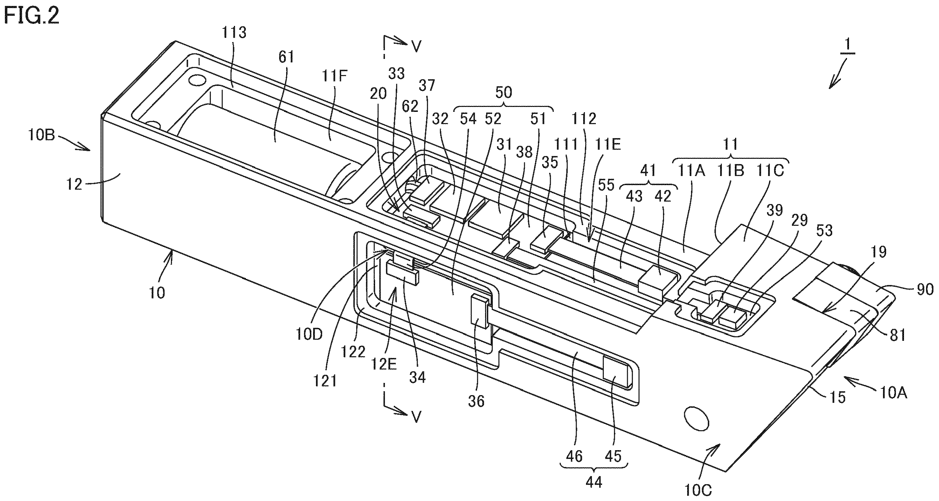

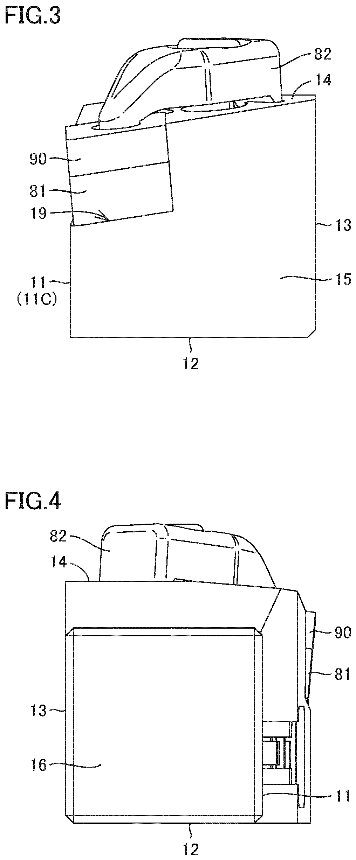

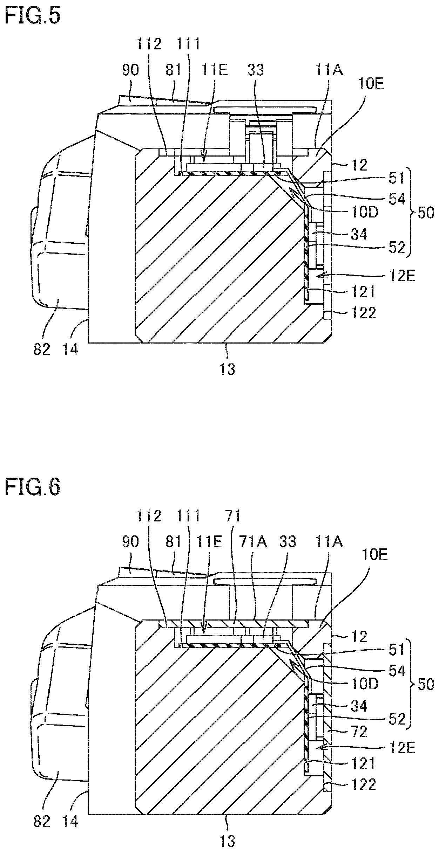

FIG. 1 is a schematic perspective view showing the structure of a cutting tool. FIG. 2 is a schematic perspective view showing the structure of the cutting tool with lids removed therefrom. FIG. 3 is a schematic plan view showing the structure of the cutting tool as viewed from a first end side. FIG. 4 is a schematic plan view showing the structure of the cutting tool as viewed from a second end side. FIG. 5 is a schematic cross-sectional view along the line V-V in FIG. 2. FIG. 6 is a schematic cross-sectional view along the line VI-VI in FIG. 1.

Referring to FIGS. 1 to 4, the cutting tool 1 of the present embodiment includes a bar-shaped body portion 10 that extends from a first end 10A to a second end 10B. Although the shape of the body portion of the present disclosure is not particularly limited, the body portion 10 of the present embodiment has a rectangular parallelepiped shape, for example. The surface of the body portion 10 includes a first surface 11, a second surface 12, a third surface 13, a fourth surface 14, a fifth surface 15, and a sixth surface 16. The first surface 11 includes a first region 11A, a third region 11C that is arranged on the first end 10A side of the first region 11A, and a second region 11B that is a stepped portion connecting the first region 11A to the third region 11C. On the first end 10A of the body portion 10, a holding portion 19 is formed, which is a recess for holding a cutting tip 90. The holding portion 19 is open at the third region 11C of the first surface 11, the fourth surface 14, and the fifth surface 15. In the holding portion 19, the cutting tip 90 and a soleplate 81 are arranged. The cutting tip 90 is disposed on top of the soleplate 81. Arranged on the fourth surface 14 near the first end 10A is a securing portion 82 for securing the cutting tip 90. The cutting tip 90 is held while being sandwiched between the soleplate 81 and the securing portion 82. The cutting tip 90 is detachably secured by the pivotable securing portion 82. The cutting tool 1 is a cutting tool that cuts a workpiece as the cutting tip 90 comes into contact with the rotating workpiece. In other words, the cutting tool 1 is a cutting tool used for turning machining.

Referring to FIG. 2, the first surface 11 of the body portion 10 has a first recess 11E formed across the first region 11A, the second region 11B, and the third region 11C. The second surface 12 has a second recess 12E formed therein. In the first region 11A of the first surface 11, a battery housing portion 11F, which is a recess for housing a battery 61, is formed on the second end 10B side as viewed from the first recess 11E. The battery 61 is housed in the battery housing portion 11F.

### (2) Structure of Sensor Unit

As shown in FIG. 2, the first recess 11E has a first board 51 arranged therein. The first board 51 is arranged in the first recess 11E located in the first region 11A. The second recess 12E has a second board 52 arranged therein. In the first recess 11E located in the third region 11C, a third board 53 is arranged. The first board 51, the second board 52, and the third board 53 each include a board body made of an insulator such as resin, and a circuit pattern (not shown) made of an electrical conductor such as copper formed on a surface of the board body. Referring to FIGS. 2 and 5, the first recess 11E and the second recess 12E are connected via a first through hole 10D. In the body portion 10, the first through hole 10D is formed to connect the first surface 11 to the second surface 12. As a result, in the longitudinal direction of the body portion 10 (direction connecting between the first end 10A and the second end 10B), the body portion 10 includes a columnar portion 10E that connects between both sides of the first through hole 10D so as to include the first surface 11 and the second surface 12.

Referring to FIGS. 2 and 5, the first board 51 and the second board 52 are electrically connected via a flexible cable 54. The first board 51, the second board 52, and the flexible cable 54 constitute a board module 50. The first board 51 is a first portion of the board module 50. The second board 52 is a second portion of the board module 50. The flexible cable 54 is a connecting portion of the board module 50. For the connecting portion, a flexible board may be adopted instead of the flexible cable 54. The flexible cable 54 passes through the first through hole 10D to electrically connect the first board 51 to the second board 52. For the connecting portion, a cable or a board other than the flexible cable and the flexible board may be adopted.

Referring to FIG. 2, the first surface 11 has a first strain sensor 42 arranged thereon. The first strain sensor 42 is arranged in the first recess 11E located in the first region 11A of the first surface 11. The second surface 12 has a second strain sensor 45 arranged thereon. The second strain sensor 45 is arranged in the second recess 12E of the second surface 12. Arranged in the third region 11C of the first surface 11 is an acceleration sensor 29. The acceleration sensor 29 is arranged in the first recess 11E located in the third region 11C. In place of, or in addition to, the acceleration sensor 29, a temperature sensor may be arranged in the third region 11C (on the third board 53 in the recess 11E). The temperature sensor is arranged closer to the first end 10A than the first strain sensor 42 and the second strain sensor 45.

The first strain sensor 42 has wiring 43 as first wiring connected thereto. The first strain sensor 42 and the wiring 43 constitute a first strain sensor component 41. The second strain sensor 45 has wiring 46 as second wiring connected thereto. The second strain sensor 45 and the wiring 46 constitute a second strain sensor component 44.

On the first board 51 (on the circuit pattern of the first board 51), an AD converter 31, a wireless communication unit 32, a connector 33, a connector 35, a connector 37, and a connector 38 are mounted. The connector 35, the connector 38, the AD converter 31, the wireless communication unit 32, the connector 33, and the connector 37 are arranged in this order in the direction from the first end 10A to the second end 10B. On the second board 52 (on the circuit pattern of the second board 52), a connector 36 and a connector 34 are mounted. The connector 36 and the connector 34 are arranged in this order in the direction from the first end 10A to the second end 10B.

The wiring 46 is connected to the connector 36. With this, the second strain sensor 45 is electrically connected to the second board 52. The connector 34 and the connector 33 are connected via the flexible cable 54. With this, the second board 52 and the first board 51 are electrically connected to each other. The wiring 43 is connected to the connector 35. With this, the first strain sensor 42 is electrically connected to the first board 51. A connector 39 and the connector 38 are connected via wiring 55. With this, the third board 53 and the first board 51 are electrically connected to each other. The connector 37 and the battery 61 are connected via wiring 62. With this, the battery 61 is electrically connected to the first board 51. The battery 61 supplies power to the AD converter 31, the wireless communication unit 32, the first strain sensor 42, the second strain sensor 45, and the acceleration sensor 29. The first to third boards 51, 52, 53 arranged on the surface of the body portion 10 as well as the AD converter 31, the wireless communication unit 32, and the connectors 33 to 39 mounted on the boards, and the first strain sensor component 41, the second strain sensor component 44, the acceleration sensor 29, and the wiring 55 constitute a sensor unit 20. It should be noted that while the case where a battery is adopted as the power supply source has been described in the present embodiment, the power supply source for the cutting tool of the present disclosure is not limited to the battery. The power supply source may be, for example, a battery built in the body portion as in the present embodiment, a power supply module prepared separately from, and connected to, the cutting tool, or may be both of them.

### (3) Placement State of Lids

Referring to FIGS. 1 and 2, the cutting tool 1 includes a first lid 71, a second lid 72, and a third lid 73. The first lid 71 covers the first recess 11E. The second lid 72 covers the second recess 12E. The third lid 73 covers the battery housing portion 11F. The first lid 71 may be entirely made of resin, rubber, or ceramic, or may be partially made of resin, rubber, or ceramic. In the case where the lid is partially made of resin, rubber, or ceramic, the remaining part of the first lid 71 may be made of metal. The second lid 72 and the third lid 73 may be entirely made of resin, rubber, or ceramic, or may be entirely made of metal. The second lid 72 and the third lid 73 may be partially made of resin, rubber, or ceramic, and the remaining parts may be made of metal. Referring to FIGS. 2 and 6, the body portion 10 includes a first bottom wall 111 and a second bottom wall 112. The first bottom wall 111 and the second bottom wall 112 constitute a wall surface defining the first recess 11E. The second bottom wall 112 has a smaller distance from an opening of the first recess 11E than the first bottom wall 111. As viewed in a depth direction of the first recess 11E, the second bottom wall 112 surrounds the first bottom wall 111. The first strain sensor 42 and the first board 51 are arranged on the first bottom wall 111. The first lid 71 is arranged on the second bottom wall 112 and is received within the first recess 11E. The first lid 71 may be bonded to the body portion 10.

The body portion 10 includes a third bottom wall 121 and a fourth bottom wall 122. The third bottom wall 121 and the fourth bottom wall 122 constitute a wall surface defining the second recess 12E. The fourth bottom wall 122 has a smaller distance from an opening of the second recess 12E than the third bottom wall 121. As viewed in a depth direction of the second recess 12E, the fourth bottom wall 122 surrounds the third bottom wall 121. The second strain sensor 45 and the second board 52 are arranged on the third bottom wall 121. The second lid 72 is arranged on the fourth bottom wall 122 and is received within the second recess 12E. The second lid 72 may be bonded to the body portion 10.

Referring to FIGS. 2 and 1, in plan view in the depth direction of the battery housing portion 11F, the body portion 10 includes an annular fifth bottom wall 113 along the outer edge of the battery housing portion 11F. The third lid 73 is arranged on the fifth bottom wall 113 and is received within the battery housing portion 11F. The third lid 73 may be secured to the body portion 10 with screws, magnets, or the like.

### (4) Operation of Cutting Tool

Referring to FIGS. 1 and 2, in operation of the cutting tool 1, the cutting tool 1 contacts a rotating workpiece at the cutting tip 90 to machine the workpiece. At this time, the strain of the body portion 10 is detected by the first strain sensor 42 and the second strain sensor 45. Further, the acceleration of the body portion 10 is detected by the acceleration sensor 29. Signals containing information on the strain and the acceleration detected by the strain sensors 42, 45 and the acceleration sensor 29 are analog signals. The information on the strain and the acceleration as the analog signals is converted into digital signals in the AD converter 31, and then transmitted to the outside by the wireless communication unit 32. Here, as the first lid 71 is entirely or partially made of resin, rubber, or ceramic, the wireless communication unit 32 can transmit the signals to the outside through the first lid 71. The signals are received and analyzed at the outside, whereby the state of the body portion 10 is monitored.

### (5) Advantageous Effects of Present Embodiment

Referring to FIG. 2, in the cutting tool 1 of the present embodiment, the first strain sensor 42 and the second strain sensor 45 are arranged on the first surface 11 and the second surface 12, respectively, of the body portion 10. This enables measurement of strain in two directions of the cutting tool 1 (body portion 10). Further, the first strain sensor 42 and the second strain sensor 45 are electrically connected to the first board 51 and the second board 52, respectively, which are connected to each other via the flexible cable 54, and the wireless communication unit 32 transmits signals containing information on the strain of the body portion 10 detected by the first strain sensor 42 and the second strain sensor 45 to the outside. By transmitting the signals containing the information on the strain of the body portion 10 detected by the first strain sensor 42 and the second strain sensor 45 using a common wireless communication unit 32, downsizing can be achieved as compared to the case where a corresponding wireless communication unit is provided for each of the first strain sensor 42 and the second strain sensor 45. Thus, the cutting tool 1 of the present embodiment can achieve downsizing while measuring the strain in two directions of the cutting tool 1.

In addition, in the present embodiment, the first recess 11E and the second recess 12E are formed in the first surface 11 and the second surface 12, respectively. The first strain sensor 42 and the first board 51 are arranged in the first recess 11E. The second strain sensor 45 and the second board 52 are arranged in the second recess 12E. As a result, the sensors and other components are suppressed from protruding to the outside and becoming an obstacle in the handling of the cutting tool 1.

Further, referring to FIGS. 1, 2, and 6, the cutting tool 1 of the present embodiment includes the first lid 71 and the second lid 72 covering the first recess 11E and the second recess 12E, respectively. The first strain sensor 42 and the second strain sensor 45 are arranged on the first bottom wall 111 and the third bottom wall 121, respectively. The first lid 71 and the second lid 72 are arranged on the second bottom wall 112 and the fourth bottom wall 122, respectively, and are received within the first recess 11E and the second recess 12E, respectively. With such a structure, the strain sensors 42 and 45 are protected by the lids 71 and 72, and the lids 71 and 72 are suppressed from becoming an obstacle in the handling of the cutting tool 1 (for example, securing the cutting tool 1 to a machine tool). In addition, in the case of bonding the lids 71 and 72 to the body portion 10, it is easy to bond the lids with a sufficient area.

Further, the present embodiment adopts the structure in which the first board 51 and the second board 52 are connected via the flexible cable 54 that passes through the first through hole 10D connecting the first surface 11 to the second surface 12. As a result, in the longitudinal direction of the body portion 10, the body portion 10 includes the columnar portion 10E that connects between both sides of the first through hole 10D so as to include the first surface 11 and the second surface 12. The presence of this columnar portion 10E facilitates imparting high rigidity to the cutting tool 1 (body portion 10).

### (Embodiment 2)

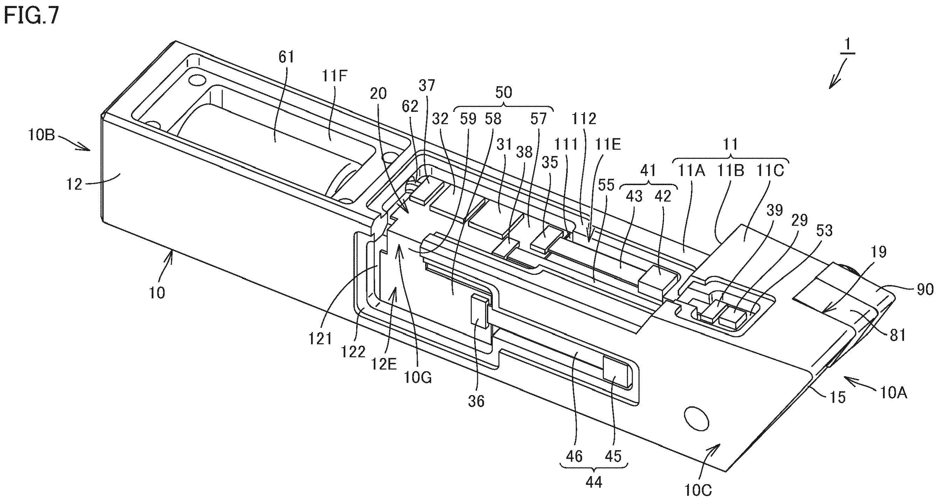

Another embodiment, Embodiment 2, will now be described. FIG. 7 is a schematic perspective view showing the structure of a cutting tool of Embodiment 2 with lids removed therefrom. FIG. 7 corresponds to FIG. 2 in Embodiment 1. Referring to FIGS. 7 and 2, the cutting tool 1 in Embodiment 2 basically has a similar structure and provides similar effects as the cutting tool 1 of Embodiment 1. However, the cutting tool 1 of Embodiment 2 differs from the cutting tool 1 of Embodiment 1 in terms of structure of the board module 50 and the body portion 10.

Referring to FIG. 7, the board module 50 of Embodiment 2 is composed of a single flexible board. The board module 50 includes a first portion 57 arranged in the first recess 11E, a second portion 58 arranged in the second recess 12E, and a connecting portion 59 electrically connecting the first portion 57 to the second portion 58. The first portion 57, the second portion 58, and the connecting portion 59 constitute the single flexible board. The body portion 10 has a notched portion 10G formed to connect the first recess 11E to the second recess 12E as a result of removal of the corner where the first surface 11 and the second surface 12 are connected. The connecting portion 59 is arranged on a bottom wall defining the notched portion 10G.

Referring to FIGS. 7 and 2, according to the cutting tool 1 of Embodiment 2, the number of components can be decreased (specifically, the connectors 33 and 34 can be omitted) as compared to the cutting tool 1 of Embodiment 1. In addition, according to the cutting tool 1 of Embodiment 2, attaching the board module 50 to the body portion 10 becomes easy as compared to the cutting tool 1 of Embodiment 1. As a result, the cutting tool 1 of Embodiment 2 can achieve downsizing of the board module 50, reduction of production cost, and the like.

### (Embodiment 3)

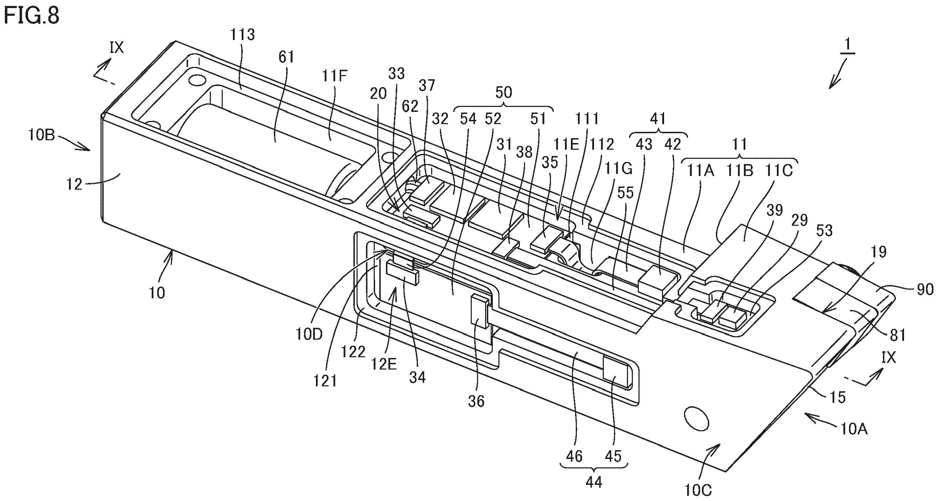

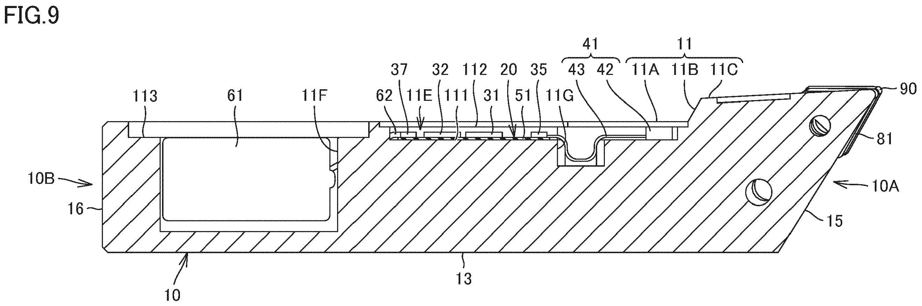

Yet another embodiment, Embodiment 3, will now be described. FIG. 8 is a schematic perspective view showing the structure of a cutting tool of Embodiment 3 with lids removed therefrom. FIG. 9 is a schematic cross-sectional view along the line IX-IX in FIG. 8. FIG. 8 corresponds to FIG. 2 in Embodiment 1. Referring to FIGS. 8 and 2, the cutting tool 1 of Embodiment 3 basically has a similar structure and provides similar effects as the cutting tool 1 of Embodiment 1. However, the cutting tool 1 of Embodiment 3 differs from the cutting tool 1 of Embodiment 1 in terms of manner of connecting the first strain sensor 42 to the connector 35 with the wiring 43 constituting the first strain sensor component 41.

Referring to FIGS. 8 and 9, in the first recess 11E of the body portion 10 of Embodiment 3, a fourth recess 11G is formed. The wiring 43 connects the first strain sensor 42 to the connector 35 on the first board 51 with slack. The portion of the wiring 43 corresponding to the slack is housed in the fourth recess 11G.

In the cutting tool 1 of Embodiment 3, the slack in the wiring 43 facilitates disposing the first strain sensor 42, without the need to adjust the length of the wiring 43.

### (Embodiment 4)

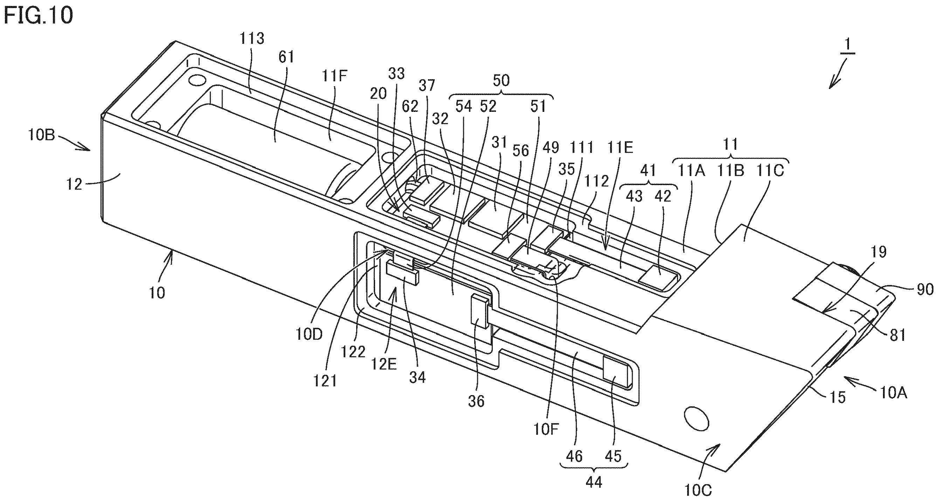

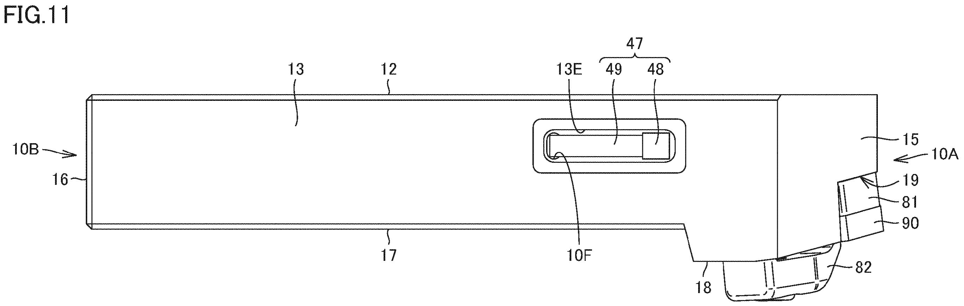

Yet another embodiment, Embodiment 4, will now be described. FIG. 10 is a schematic perspective view showing the structure of a cutting tool of Embodiment 4 with lids removed therefrom. FIG. 11 is a schematic plan view showing the structure of the cutting tool of Embodiment 4 with a lid removed therefrom. FIG. 10 corresponds to FIG. 2 in Embodiment 1. FIG. 11 is a schematic plan view of the cutting tool 1 as viewed in a direction perpendicular to the third surface 13.

Referring to FIGS. 10 and 2, the cutting tool 1 of Embodiment 4 basically has a similar structure and provides similar effects as the cutting tool 1 of Embodiment 1. However, the cutting tool 1 of Embodiment 4 differs from the cutting tool 1 of Embodiment 1 in terms of arrangement and connection state of the sensors.

Referring to FIGS. 10, 11, and 2, in the cutting tool 1 of Embodiment 4, a third strain sensor 48 is added while the acceleration sensor 29 in the cutting tool 1 of Embodiment 1 is omitted. Specifically, as shown in FIG. 11, the third surface 13 of the body portion 10 of Embodiment 4 has a third recess 13E formed therein. The body portion 10 has a second through hole 10F formed to connect the third recess 13E to the first recess 11E. It should be noted that FIG. 10 shows the state where a part of the body portion 10 is removed for the purpose of making the second through hole 10F visible. The third strain sensor 48 has wiring 49 as third wiring connected thereto. The third strain sensor 48 and the wiring 49 constitute a third strain sensor component 47. That is, the sensor unit 20 in Embodiment 4 includes the third strain sensor component 47. The wiring 49 connects the third strain sensor 48 to a connector 59 mounted on the first board 51 through the second through hole 10F. It should be noted that the second through hole 10F may connect the third recess 13E to the second recess 12E. In this case, the wiring 49 may connect the third strain sensor 48 to the second board 52 through the second through hole 10F.

In the cutting tool 1 of Embodiment 4, the third strain sensor 48 is arranged on the third surface 13, with no board disposed on the third surface 13. This can reduce the size of the third recess 13E formed in the third surface 13. As a result, the reduction of rigidity of the cutting tool 1 (body portion 10) can be suppressed. Referring to FIG. 11, the cutting tool 1 of Embodiment 4 may include a fourth lid (not shown) covering the third recess 13E. The fourth lid is preferably received within the third recess 13E, as are the first to third lids 71 to 73 described above.

### (Embodiment 5)

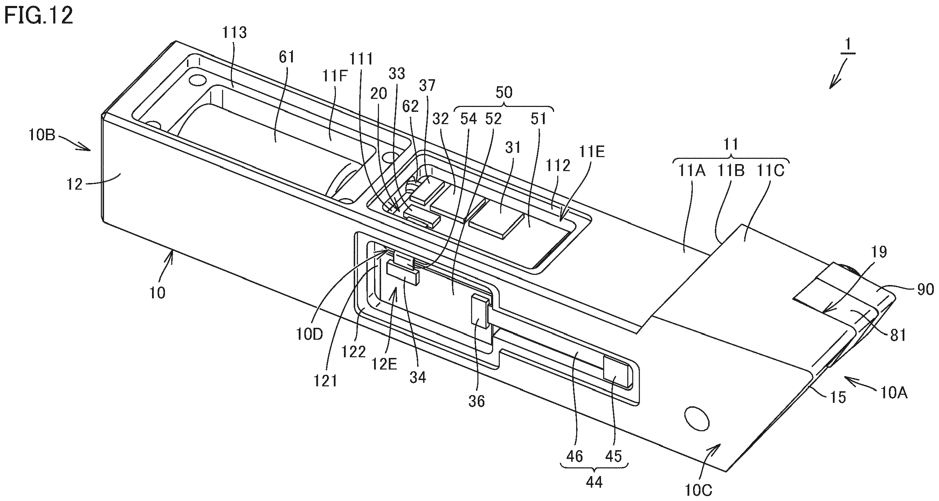

Yet another embodiment, Embodiment 5, will now be described. FIG. 12 is a schematic perspective view showing the structure of a cutting tool of Embodiment 5 with lids removed therefrom. FIG. 12 corresponds to FIG. 2 in Embodiment 1.

Referring to FIGS. 12 and 2, the cutting tool 1 of Embodiment 5 basically has a similar structure and provides similar effects as the cutting tool 1 of Embodiment 1. However, the cutting tool 1 of Embodiment 5 differs from the cutting tool 1 of Embodiment 1 in terms of arrangement of the sensors.

Referring to FIG. 12, in the cutting tool 1 of Embodiment 5, the acceleration sensor 29 and the first strain sensor 42 in the cutting tool 1 of Embodiment 1 are omitted. The cutting tool 1 of Embodiment 5 includes only one strain sensor (second strain sensor 45). The wireless communication unit 32 transmits a signal containing information on the strain of the body portion 10 detected by the second strain sensor 45 to the outside. Further, in the cutting tool 1 of the present embodiment, the board module 50 includes the first board 51 arranged on the first surface 11 and the second board 52 arranged on the second surface 12. The first board 51 and the second board 52 are connected via the flexible cable 54 which is the connecting portion. The board module 50 is thus divided and arranged on different surfaces of the body portion 10, leading to an increased degree of freedom in the locations for positioning the board module 50. As a result, it is easy to maintain the ease of the handling of the cutting tool 1. Thus, the cutting tool 1 of the present embodiment is a cutting tool that enables monitoring of the state of the cutting tool during machining, while maintaining the ease of handling.

### (Embodiment 6)

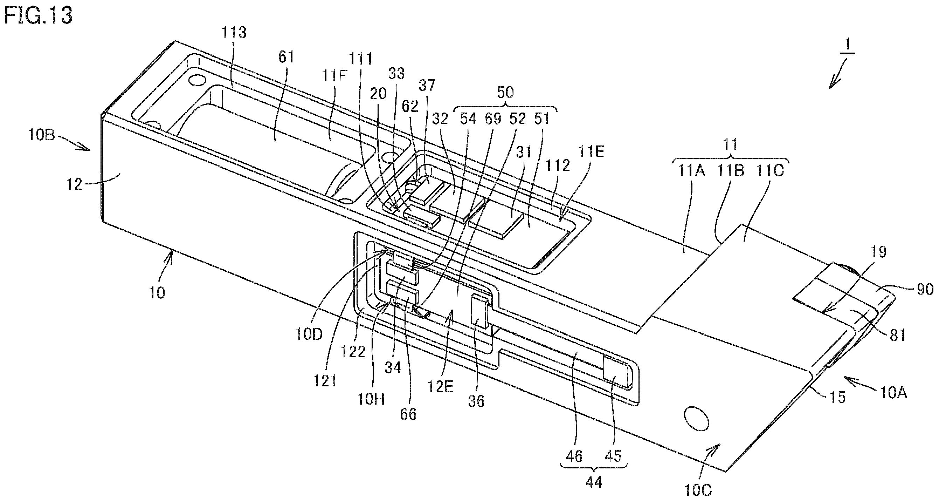

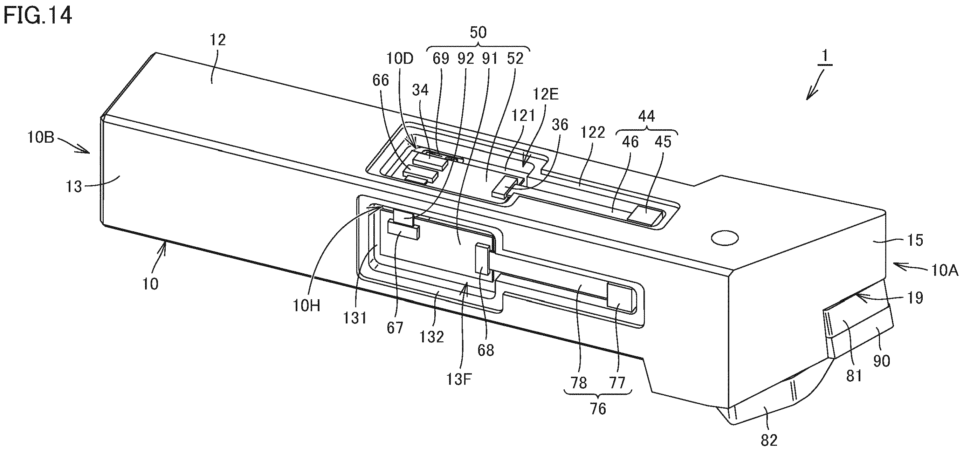

Still yet another embodiment, Embodiment 6, will now be described. FIG. 13 is a schematic perspective view showing the structure of a cutting tool of Embodiment 6 with lids removed therefrom. FIG. 13 corresponds to FIG. 12 in Embodiment 5. FIG. 14 is a schematic perspective view of the cutting tool of Embodiment 6 as seen in a different viewpoint from that of FIG. 13.

Referring to FIGS. 13, 14, and 12, the cutting tool 1 of Embodiment 6 basically has a similar structure and provides similar effects as the cutting tool 1 of Embodiment 5. However, the cutting tool 1 of Embodiment 6 differs from the cutting tool 1 of Embodiment 5 in terms of arrangement of the sensors.

Referring to FIGS. 13 and 14, in the cutting tool 1 of Embodiment 6, a fourth strain sensor 77 is added to the cutting tool 1 of Embodiment 5. That is, the cutting tool 1 of Embodiment 6 includes two strain sensors.

Referring to FIG. 14, the third surface 13 has a fifth recess 13F formed therein. In the fifth recess 13F, a fourth board 91 is arranged. The fourth board 91, as with the first board 51 and the like, includes a board body made of an insulator such as resin, and a circuit pattern (not shown) made of an electrical conductor such as copper formed on a surface of the board body. The second recess 12E and the fifth recess 13F are connected via a third through hole 10H.

The second board 52 and the fourth board 91 are electrically connected via a flexible cable 92. The fourth board 91 and the flexible cable 92 constitute the board module 50. The fourth board 91 is a third portion of the board module 50. The flexible cable 92 is a connecting portion of the board module 50. For the connecting portion, a flexible board may be adopted instead of the flexible cable 92. The flexible cable 92 passes through the third through hole 10H to electrically connect the second board 52 to the fourth board 91. For the connecting portion, a cable or a board other than the flexible cable and the flexible board may be adopted.

The fourth strain sensor 77 is arranged on the third surface 13. The fourth strain sensor 77 is arranged in the fifth recess 13F located in the first surface 13. The fourth strain sensor 77 has wiring 78 connected thereto. The fourth strain sensor 77 and the wiring 78 constitute a fourth strain sensor component 76. On the second board 52 (on the circuit pattern of the second board 52), a connector 66 is mounted in addition to the case of Embodiment 5. On the fourth board 91 (on the circuit pattern of the fourth board 91), connectors 67 and 68 are mounted. The wiring 78 is connected to the connector 68. With this, the fourth strain sensor 77 is electrically connected to the fourth board 91. The connector 66 and the connector 67 are connected via the flexible cable 92. With this, the second board 52 and the fourth board 91 are electrically connected to each other. The second board 52 and the fourth board 91 arranged on the surface of the body portion 10 as well as the connectors 66 to 68 mounted on the boards, and the fourth strain sensor component 76 constitute the sensor unit 20.

Referring to FIG. 14, the cutting tool 1 of Embodiment 6 may include a fifth lid (not shown) covering the fifth recess 13F. The fifth lid is preferably received within the fifth recess 13F, as are the first to third lids 71 to 73 described above. The body portion 10 includes a sixth bottom wall 131 and a seventh bottom wall 132. The sixth bottom wall 131 and the seventh bottom wall 132 constitute a wall surface defining the fifth recess 13F. The seventh bottom wall 132 has a smaller distance from an opening of the fifth recess 13F than the sixth bottom wall 131. As viewed in a depth direction of the fifth recess 13F, the seventh bottom wall 132 surrounds the sixth bottom wall 131. The fourth strain sensor 77 and the fourth board 91 are arranged on the sixth bottom wall 131. The fifth lid is arranged on the seventh bottom wall 132 and is preferably received within the fifth recess 13F. The fifth lid may be bonded to the body portion 10. Adopting the structure as in the present embodiment can achieve downsizing while measuring the strain in two directions of the cutting tool 1, as in the case of Embodiment 1.

### (Variations)

In the above embodiments, the case where the acceleration sensor 29 is arranged on the first surface 11 (Embodiments 1 to 3) and the case where no acceleration sensor 29 is adopted (Embodiment 4) have been described. However, the acceleration sensor 29 may be arranged on at least one of the second surface 12, the third surface 13, and the fourth surface 14, besides the first surface 11, and may be arranged on all the surfaces. In the above embodiments, the case where the strain sensor is arranged only on the second surface (Embodiment 5), the case where the strain sensors are disposed on the first surface 11 and the second surface 12 (Embodiments 1 to 3), the case where the strain sensors are arranged on the second surface and the third surface (Embodiment 6), and the case where the strain sensors are disposed on the first surface 11 through the third surface 13 (Embodiment 4) have been described. However, the strain sensor may be disposed also on the fourth surface 14. That is, the strain sensor only needs to be arranged on at least one of the first through fourth surfaces, and may be arranged on all the surfaces. Further, the board constituting the board module (the first portion and the like) only needs to be arranged on at least one of the first through fourth surfaces, and may be arranged on all the surfaces. In the above embodiments, the case where the board module is arranged on two or more of the first through fourth surfaces has been described. However, the board module may be arranged on only one of the first through fourth surfaces. These sensor arrangement and board module configuration may be combined arbitrarily. For example, one board (first portion or the like) constituting the board module and one strain sensor may be arranged on three surfaces out of the first through fourth surfaces, or may be arranged on the four surfaces (all the surfaces). Further, the recesses such as the first recess 11E, the second recess 12E, the fourth recess 11G, the third recess 13E, and the fifth recess 13F formed in the surface of the body portion 10 may be filled with a filler (e.g., resin filler). Even in the case where the recesses are filled with the filler or the case where the lids are provided to cover the recesses, the wall surfaces such as the bottom and side walls defining the recesses constitute the surface of the body portion 10.

Further, in the cutting tool 1 of the above embodiments, a light emitting device, such as a light emitting diode, may be disposed in the first recess 11E, the second recess 12E, or other recess formed in the surface of the body portion 10 to indicate the state of operation of the cutting tool 1. This light emitting device may emit light when the power of the sensor unit 20 of the cutting tool is on, for example. This light emitting device emits visible light. In this case, the lids such as the first lid 71 and the second lid 72 covering the recesses have translucency to the light from the light emitting device. The first lid 71, the second lid 72, and other lids covering the recesses may be transparent to visible light. The light emitting device may be arranged in a recess that is different from the recesses in which the sensor unit 20 is housed. This recess may be molded with resin or another material that has translucency to the light from the light emitting device.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

1: cutting tool; 10: body portion; 10A: first end; 10B: second end; 10D: first through hole; 10E: columnar portion; 10F: second through hole; 10G: notched portion; 10H: third through hole; 11: first surface; 11A: first region; 11B: second region; 11C: third region; 11E: first recess; 11F: battery housing portion; 11G: fourth recess; 12: second surface; 12E: second recess; 13: third surface; 13E: third recess; 13F: fifth recess; 14: fourth surface; 15: fifth surface; 16: sixth surface; 19: holding portion; 20: sensor unit; 29: acceleration sensor; 31: AD converter; 32: wireless communication unit; 33 to 39: connector; 41: first strain sensor component; 42: first strain sensor; 43: wiring; 44: second strain sensor component; 45: second strain sensor; 46: wiring; 47: third strain sensor component; 48: third strain sensor; 49: wiring; 50: board module; 51: first board; 52: second board; 53: third board; 54: flexible cable; 55: wiring; 56: connector; 57: first portion; 58: second portion; 59: connecting portion; 61: battery; 62: wiring; 66 to 68: connector; 71: first lid; 72: second lid; 73: third lid; 76: fourth strain sensor component; 77: fourth strain sensor; 78: wiring; 81: soleplate; 82: securing portion; 90: cutting tip; 91: fourth board; 92: flexible cable; 111: first bottom wall; 112: second bottom wall; 113: fifth bottom wall; 121: third bottom wall; 122: fourth bottom wall; 131: sixth bottom wall; and 132: seventh bottom wall.

## Claims

1. A cutting tool for cutting a workpiece by contacting the workpiece that is rotating, the cutting tool comprising:
a body portion having a bar shape extending from a first end to a second end; and
a sensor unit arranged on a surface of the body portion,
the surface of the body portion including
a first surface,
a second surface, and
a third surface,
the sensor unit including
a first strain sensor arranged on any of the first surface, the second surface, and the third surface,
a board module electrically connected to the first strain sensor, and
a wireless communication unit mounted on the board module and transmitting a signal containing information on strain of the body portion detected by the first strain sensor to an outside,
the board module including
a first portion arranged on the first surface,
a second portion arranged on the second surface, and
a connecting portion electrically connecting the first portion to the second portion,
the first strain sensor being electrically connected to the first portion or the second portion.

2. The cutting tool according to claim 1, wherein
the first surface has a first recess formed therein,
the second surface has a second recess formed therein,
the first portion is arranged in the first recess,
the second portion is arranged in the second recess, and
the first strain sensor is arranged in one of the first recess and the second recess, or
with the third surface having a third recess formed therein, the first strain sensor is arranged in the third recess.

3. The cutting tool according to claim 2, further comprising a lid that covers a sensor housing recess, which is one of the first recess, the second recess, and the third recess in which the first strain sensor is arranged, wherein
the body portion includes
a first bottom wall constituting a wall surface defining the sensor housing recess, and
a second bottom wall constituting the wall surface defining the sensor housing recess, the second bottom wall having a smaller distance from an opening of the sensor housing recess than the first bottom wall, the second bottom wall surrounding the first bottom wall as viewed in a depth direction of the sensor housing recess,
the first strain sensor is arranged on the first bottom wall, and
the lid is arranged on the second bottom wall and is received within the sensor housing recess.

4. The cutting tool according to any one of claims 1 to 3, wherein
the first portion is a first board,
the second portion is a second board,
the connecting portion is a cable or a connecting board that electrically connects the first board to the second board,
the body portion has a first through hole formed to connect the first surface to the second surface, and
the cable or the connecting board electrically connects the first board to the second board through the first through hole.

5. The cutting tool according to any one of claims 1 to 3, wherein the first portion, the second portion, and the connecting portion are composed of a single board.

6. The cutting tool according to any one of claims 1 to 5, wherein the sensor unit further includes first wiring that connects the first strain sensor to the board module with slack.

7. The cutting tool according to claim 6, wherein
the surface of the body portion has a fourth recess formed therein, and
a portion of the first wiring corresponding to the slack is housed in the fourth recess.

8. The cutting tool according to any one of claims 1 to 7, wherein
the sensor unit further includes a second strain sensor electrically connected to the board module,
the wireless communication unit transmits the signal further containing information on the strain of the body portion detected by the second strain sensor to the outside,
the first strain sensor is arranged on the first surface and electrically connected to the first portion, and
the second strain sensor is arranged on the second surface and electrically connected to the second portion.

9. The cutting tool according to claim 8, wherein
the sensor unit further includes
a third strain sensor arranged on the third surface, and
third wiring connected to the third strain sensor,
the body portion has a second through hole formed to connect the third surface to the first surface or the second surface, and
the third wiring connects the third strain sensor to the first portion or the second portion through the second through hole.
